# EUROPEAN PATENT SPECIFICATION

(11) **EP 2 914 479 B1**
(45) Date of publication and mention of the grant of the patent: **15.05.2019**
(21) Application number: 13826941.0
(22) Date of filing: 31.10.2013
(51) Int. Cl.: B62K 23/06, B62L 3/02, B60T 7/10, B60T 11/16, B60T 11/18

(54) **ACTUATION DEVICE FOR A HYDRAULIC ACTUATOR**
BETÄTIGUNGSVORRICHTUNG FÜR EINEN HYDRAULISCHEN AKTUATOR
DISPOSITIF D'ACTIONNEMENT POUR UN ACTIONNEUR HYDRAULIQUE

(30) Priority: 31.10.2012 IT PD20120323
(43) Date of publication of application: 09.09.2015
(73) Proprietor: Freni Brembo S.p.A., 24035 Curno (Bergamo) (IT)
(72) Inventor: LAVEZZI, Roberto, I-24035 Curno Bergamo (IT); ESPOSITO, Alessandro, I-24035 Curno Bergamo (IT)
(74) Representative: Mitola, Marco
(86) International application number: PCT/IB2013/059826
(87) International publication number: WO 2014/068518

(56) References cited:
- EP-A1- 1 160 152
- WO-A1-2008/056379
- US-A- 4 560 049
- US-A1- 2003 121 736

## Description

### FIELD OF APPLICATION

The present invention relates to an actuation device for actuating a hydraulic actuator such as a brake and/or clutch, in particular for motorcycles.

### STATE OF THE ART

In particular, in the motorcycle sector, it is known of to make mechanical and/or hydraulic actuation devices for actuating hydraulic actuators, such as for example brakes and/or clutches.

The actuation device comprises a device body and an actuation lever which, when pulled manually by the user, actuates the brake or clutch. Such actuation is of the hydraulic type and provides for the use of pumps fitted with a piston influenced by the movement of the actuation lever. In particular, the piston is operatively connected to a tip which in turn interfaces with a pusher attached to the actuation lever. The rotation of the actuation lever, thanks to the coupling of the pusher and tip, makes it possible to obtain a translation of the piston and thereby the actuation, by means of the hydraulic circuit, of the brake and/or clutch.

It is known of in the art to fit the actuation devices with adjustment devices, in particular of the distance/position at rest of the actuation lever from the handlebar; such adjustment enables the rider to find the most ergonomic position by adapting the command to his/her build and/or requirements.

It is known of to also fit the actuation levers with adjustment devices of the clearance at rest of said lever, that is to say of the empty stroke of the lever before it actuates the hydraulic actuator connected thereto.

In addition, it is known of in the art to fit the actuation devices with adjustment organs of the actuation sensitivity of the lever, for the same stroke thereof; in other words, mechanisms are known of for adjusting the transmission ratio between the stroke of the actuation lever and the stroke of the actuation device piston. Such devices are known of for example from WO 2008/056379 A1, on which the preamble of independent claim 1 is based, in the Applicant's name. Other known actuation devices are disclosed in US 2003/121736 A1, EP 1160152 A1 and US 4560049 A.

In this case too the adjustment is used by the rider to adapt and customise the actuation device to his requirements and style of riding.

### PRESENTATION OF THE INVENTION

The adjustments mentioned above are made by means of devices which are rather complicated to make and assemble. In addition, a device is not known of which is able to perform the three aforementioned adjustments, relative to the distance/position at rest of the actuation lever, clearance of the actuation lever and to the transmission ratio between the stroke of the actuation lever and the stroke of the piston.

In addition, the devices of the prior art do not permit the regulation of some parameters, with particular reference to the transmission ratio between the stroke of the actuation lever and the stroke of the piston, while the vehicle is moving; in other words, the adjustments are only possible with the vehicle at a standstill by means of the use of tools.

The need is therefore felt to make an actuation device for actuating a hydraulic actuator, which ensures all the adjustments of the devices of the prior art but which is simpler to assemble and use, with particular reference to possible adjustments while the vehicle is moving.

Such need is satisfied by an actuation device for actuating a hydraulic actuator, according to independent claim 1.

In accordance with the present invention there is provided an actuation device for actuating a hydraulic actuator, as set out in independent claim 1. Preferred embodiments of the present invention are laid down in the appended dependent claims.

### DESCRIPTION OF THE DRAWINGS

Further characteristics and advantages of the present invention will be more clearly comprehensible from the description given below of its preferred and non-limiting embodiments, wherein:

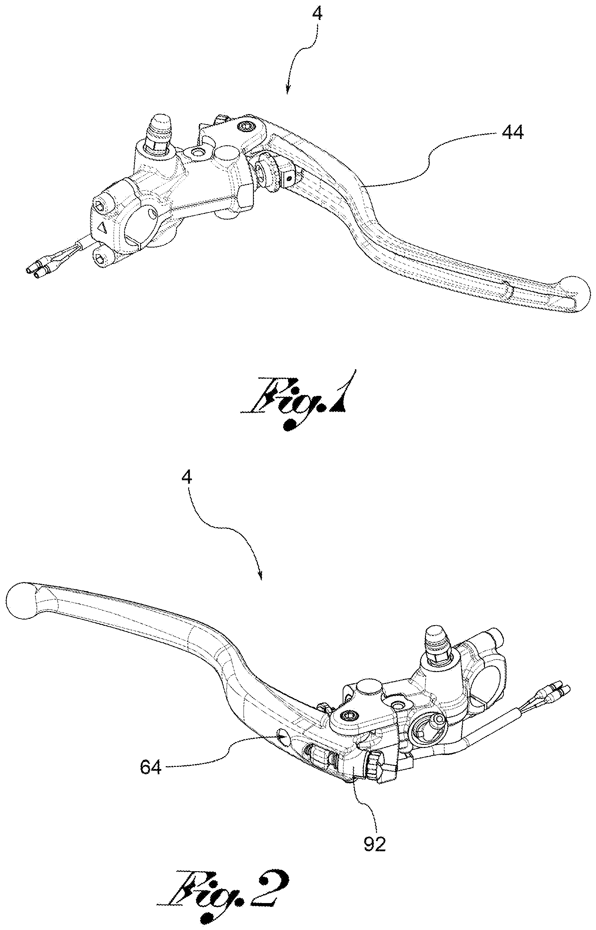

figures 1-2 show perspective views from different angles of an actuation device for actuating a hydraulic actuator according to one embodiment of the present invention;
figure 3a shows a perspective view, in separate parts, of an actuation device for actuating a hydraulic actuator according to one embodiment of the present invention;
figures 3b and 3d show views of further embodiments of the present invention;
figure 3c shows a view of an actuating device for actuating a hydraulic actuator, which does not belong to the present invention;
figures 4-6 show views partially in cross-section of an actuation device for actuating a hydraulic actuator according to the invention; said views representing different adjustments of the device;
figure 7 is a cross-section view of a device according to one embodiment of the present invention, in a maximum empty stroke configuration;
figure 8 shows the enlarged detail VIII in figure 7;
figure 9 shows the enlarged detail IX in figure 7;
figure 10 is a cross-section view of a device according to one embodiment of the present invention, in a minimum empty stroke configuration;
figure 11 shows the enlarged detail XI in figure 10;
figure 12 shows the enlarged detail XII in figure 10;

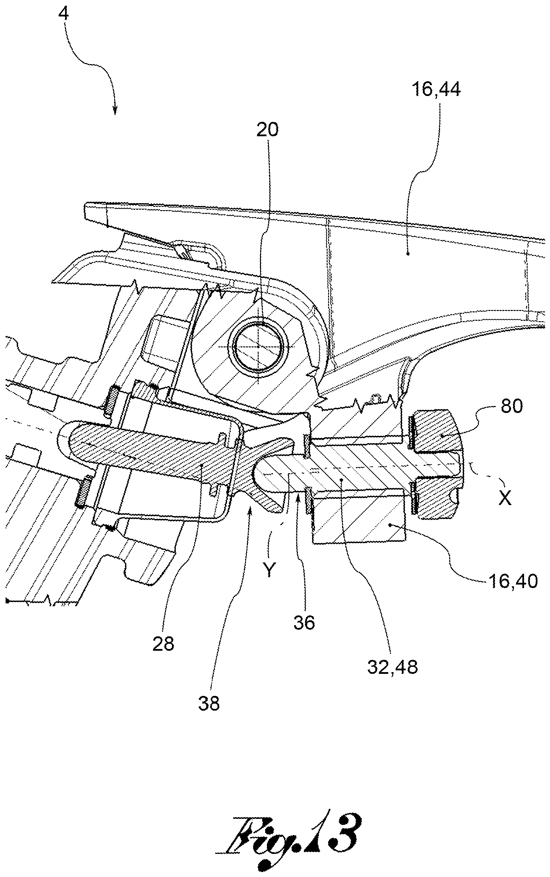

figure 13 shows a view, partially in cross-section, of an actuation device for actuating a hydraulic actuator, which does not belong to the present invention.

The elements or parts of elements common to the embodiments described below will be indicated using the same reference numerals.

### DETAILED DESCRIPTION

With reference to the aforementioned figures, reference numeral 4 globally denotes an actuation device for brakes and/or clutches, in particular for motorcycles in general. Typically this is a lever actuation device positioned on the handlebar of the motorcycle which may be used to actuate a hydraulic actuator such as a brake, for example front brake situated on the right side of the handlebar or a clutch, situated on the left side of the handlebar.

The actuation device 4 comprises a support 8 suitable for being connected to a weight-bearing structure, such as for example a handlebar of the motorcycle (not shown) and a hydraulic actuator 12 connected to the support 8. The hydraulic actuator 12 may be of any type, shape and size. The hydraulic actuator comprises at least one piston 14 suitable for pressurising an actuation fluid of an associable hydraulic circuit, in the known manner.

The actuation device 4 further comprises at least one lever device 16 connected to the support 8 so as to rotate around an actuation axis R-R so as to permit its movement towards and/or away from the hydraulic actuator 12 to influence said hydraulic actuator 12 in movement.

The lever device 16 may for example be attached to a rotation pin 20 which defines said actuation axis R-R; for example the rotation pin is supported and guided by special ears 24 made on the support 8.

The actuation device 4 further comprises a command rod 28 and an adjustment device 32 positioned between the lever device 16 and the piston 14 of said hydraulic actuator 12 so as to transmit the movement from the lever device 16 to said piston 14.

The adjustment device 32 is supported so as to rotate around an adjustment axis X-X and comprises a first end 36 which interfaces, at least partially by means of a shaped coupling, with an end 38 of the command rod 28.

According to a possible embodiment, the first end 36 of the adjustment device 32 is shaped so as to define a seat which at least partially houses the end 38 of the command rod 28, said end 38 being shaped so as to define a protuberance at least partially housed in said seat.

According to a further embodiment, the first end 36 of the adjustment device 32 is shaped so as to define a protuberance at least partially housed in the end 38 of the command rod 28, said end 38 being shaped so as to define a seat.

Preferably, the seat is a paraboloid shape and the protuberance has a spherical cap shape.

The first end 36 is eccentric to the adjustment axis X-X so that a rotation of the adjustment device 32 produces a variation/adjustment of the orientation of the command rod 28 in relation to the actuation axis R-R of the lever device 16 and thereby the adjustment of the lever ratio. Eccentricity is understood to refer to the distance "E" identified between an axis of symmetry Y-Y of the first end 36 and said adjustment axis X-X.

In other words, by varying the orientation of the command rod following the rotation of the adjustment device 32, the lever arm L exercised by means of the lever device 16 on the command rod is modified, said lever arm being measured in relation to the rotation pin 20 defining the actuation axis R-R.

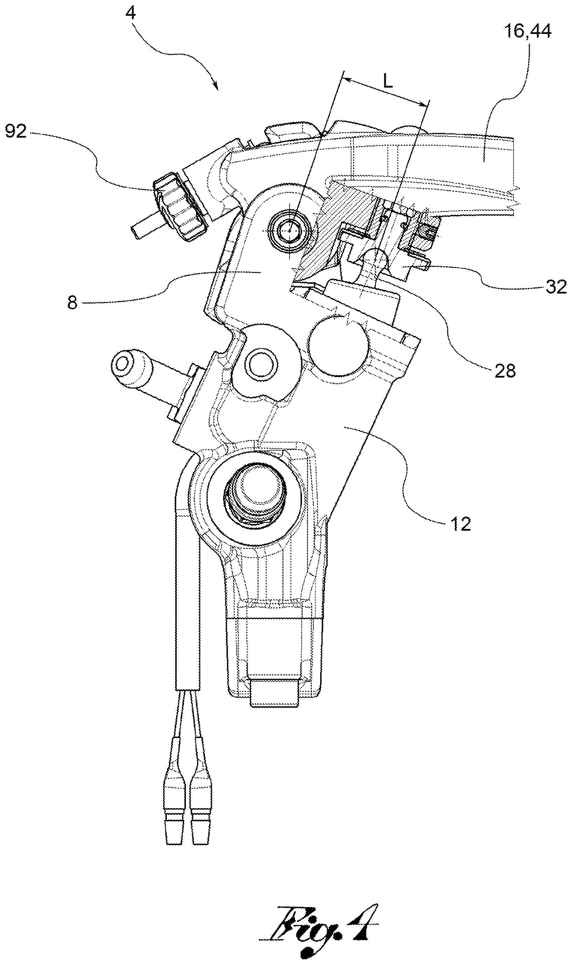

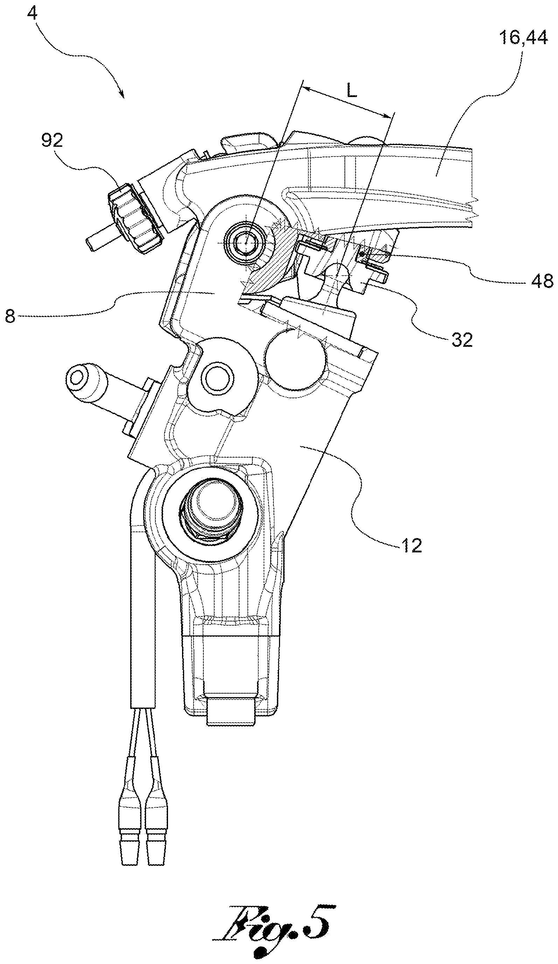

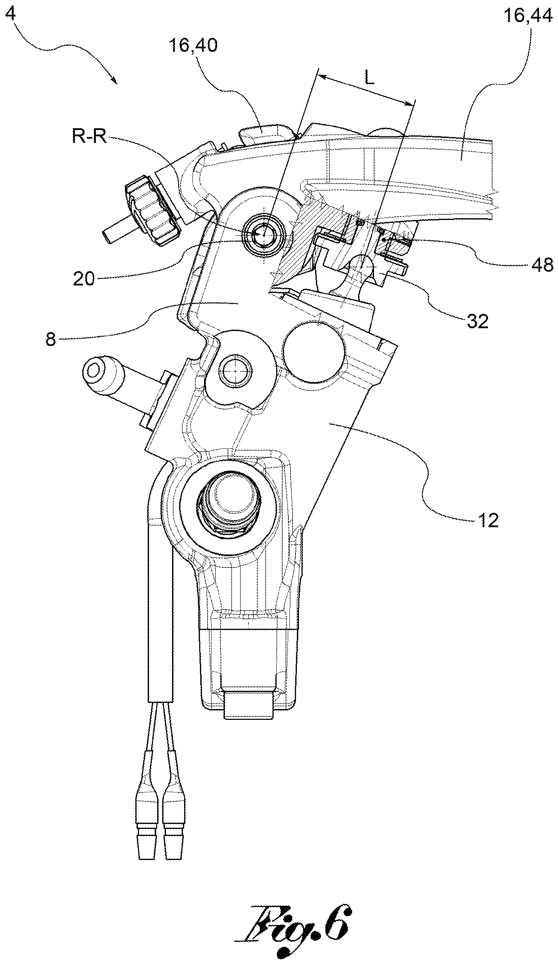

For example, figures 4-6 show three configurations having gradually increasing lever arms; such configurations are obtained by rotating the adjustment device 32 around the adjustment axis X-X.

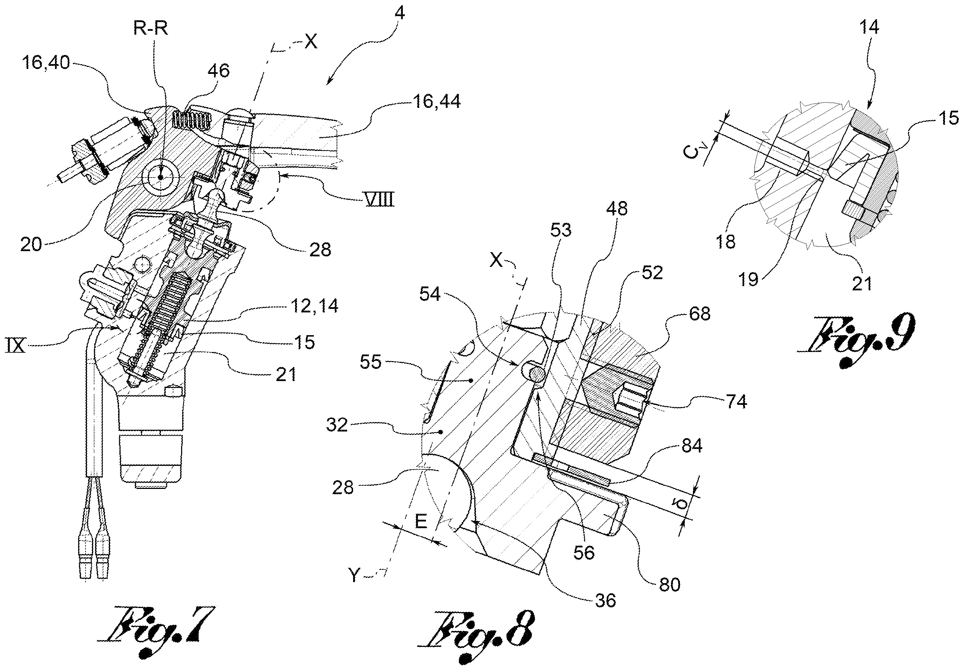

The piston 14 comprises a head 15 which slides inside a relative cylinder 21 which receives the hydraulic supply fluid through a dedicated supply duct 18; such supply duct 18 is in turn connected to a hydraulic fluid tank (not shown). In particular, the supply duct 18 comes out in an opening 19 on the chamber or cylinder 21 which the piston 14 is housed in. When the piston 14 covers the opening 19 of the supply duct 18, it pressurises the hydraulic fluid thereby actuating the actuator 12 such as for example the brake or the hydraulic clutch. The piston 14, in the rest condition, is always rearward of the opening of the supply duct so as to permit the hydraulic fluid to always compensate the quantity of fluid which, following braking and the relative consumption of the brake pads, must necessarily be introduced inside the hydraulic circuit to prevent the creation of vacuums. The same is true of the clutch, given that every actuation thereof entails its consumption. In addition, the compensation is also needed to compensate volumetric variations of the fluid due to changes in temperature. The stroke which the piston 14 must perform to obstruct the supply duct 18 is known as the empty stroke Cv; such empty stroke Cv is for example visible in figure 9.

Advantageously, the lever device 16 comprises a clamp 40 connected to the support 8 so as to rotate around said actuation axis R-R and an actuation lever 44, suitable for being gripped by the user.

According to one embodiment, the lever device is in one piece; in other words the clamp 40 and the actuation lever 44 are in one piece; according to a further embodiment, the actuation lever 44 is in turn pivoted in relation to the bracket 40 so as to present a relative rotation in relation to the clamp 40; in other words, the actuation lever 44 and the clamp 40 are in separate pieces hinged to each other.

Preferably, in such configuration, elastic means 46 are positioned between the actuation lever 44 and the clamp 40.

Advantageously, a first regulator 48 is inserted between the lever device 16 and the adjustment device 32 which regulates the axial position of the adjustment device 32 in relation to the lever device 16, said position being measured parallel to the adjustment axis X-X. The first regulator is thus axially constrained to the adjustment device 32 so as to translate with it parallel to the adjustment axis X-X.

The first regulator 48 is able to vary the axial position of said first regulator and of the associated adjustment device of an adjustment stroke δ.

In other words, the first regulator 48 axially positions the adjustment device 32 parallel to the adjustment axis X-X: such axial position of the adjustment device 32 also determines the position of the piston 14 and thus the distance at rest between the piston 14 and the opening of the supply duct 18.

According to one embodiment, the first regulator 48 is positioned coaxially to the adjustment axis of the adjustment device.

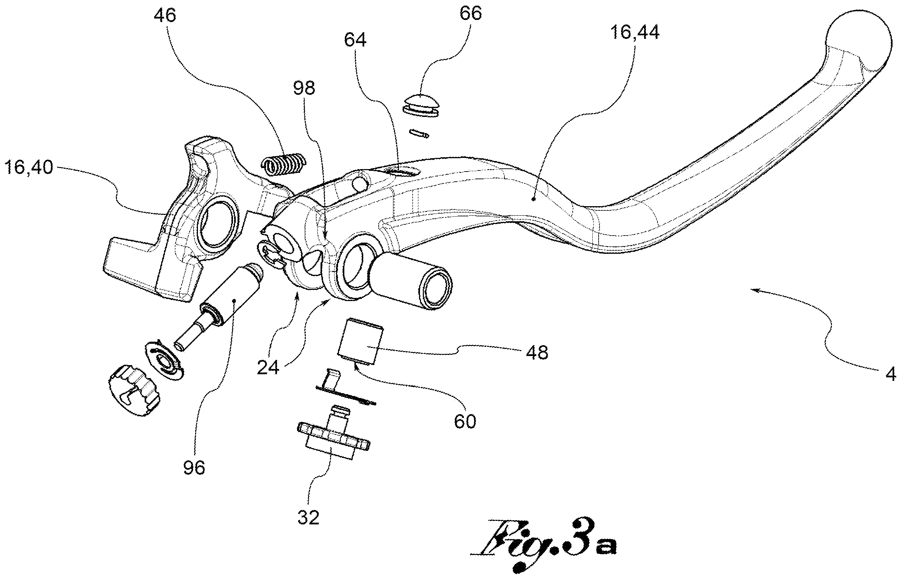

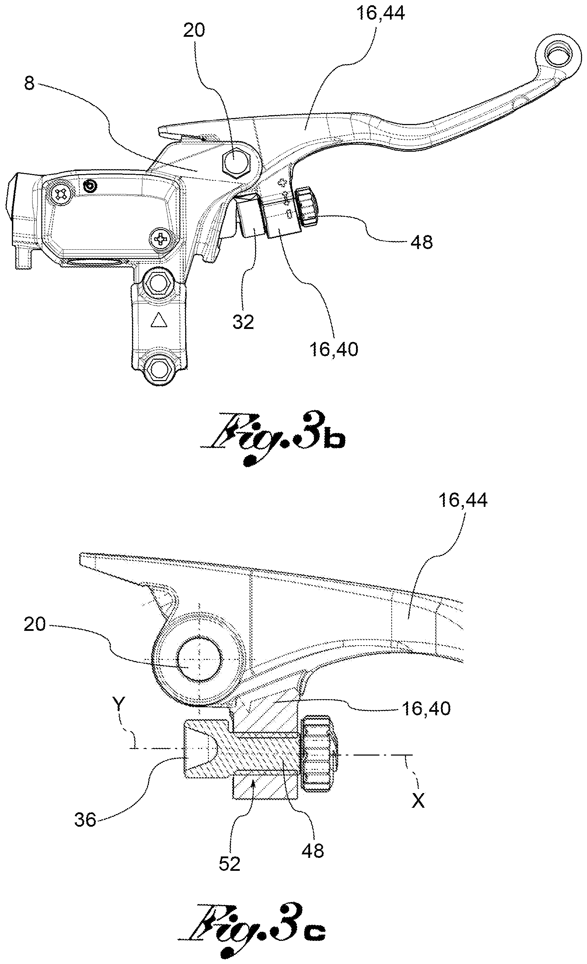

In figure 3c, the first regulator 48 is in one piece with the adjustment device 32 so as to rotate integrally therewith around said adjustment axis X-X, during said rotation the adjustment device 32 translating parallel to the adjustment axis X-X so as to modify the adjustment stroke δ and/or the distance of the actuation lever 44 from the handlebar to which the device 4 is associated.

In figure 3c the adjustment device 32 and the first regulator 48 are integral with each other and positioned on opposite sides of the clamp 40.

According to one embodiment, the first regulator 48 is rotatable in relation to the adjustment device 32 around said adjustment axis X-X, so as to permit the adjustment of the empty stroke of the actuation lever 44 and of the piston 14 independently of the rotation of the adjustment device 32 and the relative adjustment of the orientation of the command rod.

The first regulator 48 is a bush screwed into a threaded seat 52 made on said clamp 40. The screw coupling of the first regulator 48 and threaded seat makes it possible to translate the first regulator and thereby the adjustment device 32 connected thereto, following a rotation of said first regulator.

The first regulator 48 is hollow so as to house at least partially an end of the adjustment device 32 opposite said first end 36. The end of the adjustment device 32 is joined to the first regulator by means of a coupling which axially joins the adjustment device 32 and the first regulator 48 to each other parallel to the adjustment axis X-X and which permits relative rotations between them in relation to said adjustment axis X-X. Such coupling may for example be made by interposing an O-ring or metal elastic ring, which inserted in a groove 54 made on the cylindrical protuberance 55 of the adjustment device 32, permits the relative rotation between the elements but which prevents the relative axial translation thereof. For example, the O-ring 53 abuts against a radial recess 56 made on the inside of the first regulator 48: said radial recess 56 thus forms an undercut which axially constrains the adjustment device 32 and the first regulator 48 to each other, while permitting respective relative rotations.

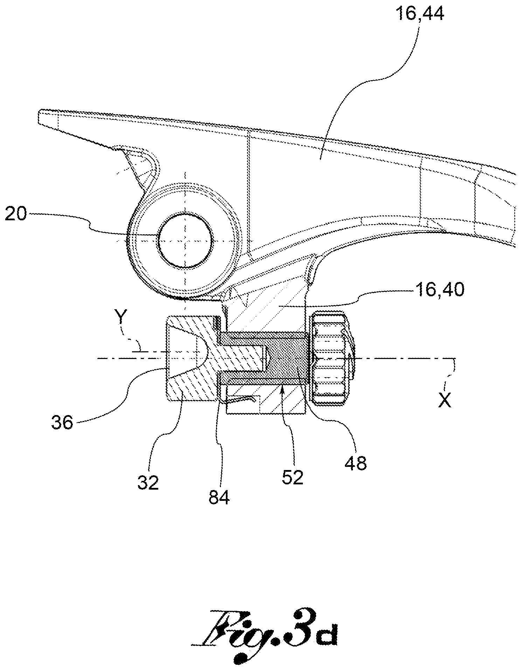

According to a further embodiment, as shown for example in figure 3d, the adjustment device 32 and the first regulator 48 are coaxial with each other and inserted at least partially in the clamp 40 on opposite sides thereof. The first regulator 48 may be fitted with a head shaped so as to facilitate its manual rotation.

According to a further embodiment, the first regulator 48 comprises an adjustment head provided with a cavity 60 to permit its rotation from the outside, For example, the cavity 60 may be a hexagonal cylindrical shape so as to permit its rotation by means of an external "Allen" type wrench

Preferably, the actuation lever 44 comprises a window 64 facing the first regulator 48 and passing through said lever so as to permit the passage of a tool from outside the actuation lever 44 and its engagement with the cavity 60 of the first regulator 48, for the rotation of said first regulator. Preferably, the actuation lever is fitted with a plug 66 placed so as to close the window 64 when adjustments of the first regulator 48 do not need to be performed.

According to a preferred embodiment, the clamp 40 comprises a bracket 68 which receives the adjustment device 32 and the first regulator 48; said bracket 68 defining the threaded seat 52 inside which the first regulator 48 is screwed.

According to one embodiment, the bracket 68 has at least one lateral hole 72 in which a blocking means 74 of the position of the first regulator 48 is screwed. The blocking means 74 may be composed of a nut which abuts against the outer thread of the first regulator 48 preventing its rotation.

Preferably, the adjustment device 32 comprises an actuation ring-nut 80, so as to permit the manual rotation of said device; said actuation ring-nut 80 may for example be placed between the actuation lever 44 and the command rod 28.

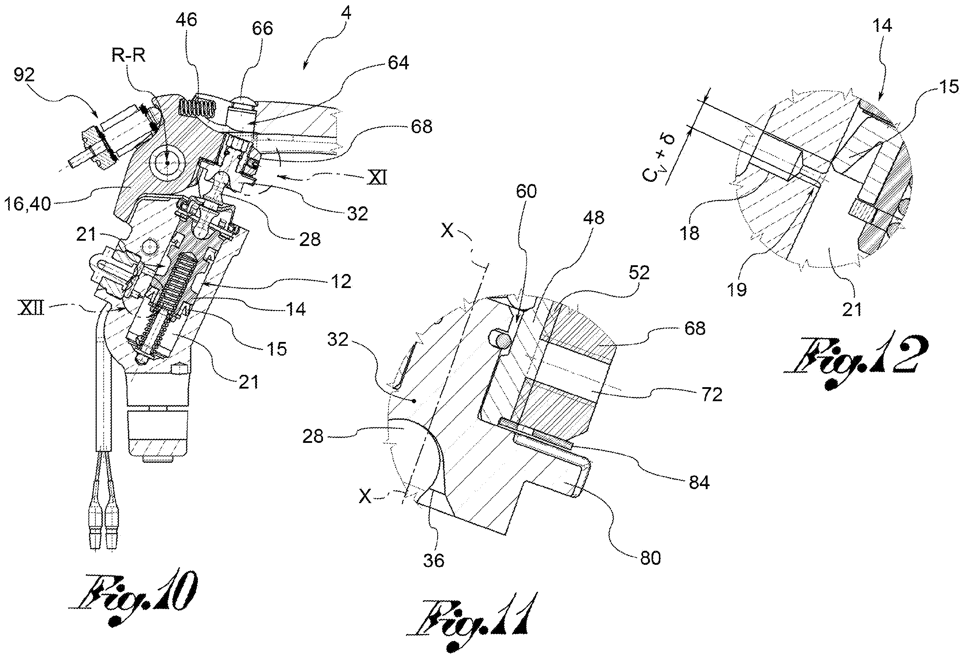

The actuation ring-nut 80 has a greater diameter than the seat which the first regulator 48 is housed in, made on said clamp 40: this way the actuation ring-nut forms an end stop to the adjustment of the axial position of the first regulator 48 and thus of the adjustment device 32. The abutment between the actuation ring-nut 80 and the clamp 40 corresponds to the maximum empty stroke Cv which can be obtained from the adjustment. Such condition is illustrated for example in figures 10-12.

In fact, the maximum empty stroke is given by the sum of the empty stroke Cv caused by the axial extension of the opening 19 and by the maximum excursion δ which can be obtained by moving the first regulator 48 rearwards, that is to say distancing the first regulator 48, and thus the adjustment device 32, from the command rod 28 and thus from the piston 14.

Preferably, the adjustment device 32 comprises an attachment clip 84 for blocking said adjustment device in rotation.

For example, the attachment clip 84 is an elastic washer placed between the adjustment device 32 and the first regulator 48 so as to join said components to each other in relation to the adjustment axis X-X: this way, the rotation of the adjustment device 32 during the use of the device 4 is prevented by the fact that the first regulator 48 to which the adjustment device 32 is constrained in rotation, is in turn blocked in rotation by the blocking means 74. Obviously the attachment clip 84 ensures the angular adjustment of the adjustment device, preventing it from adjusting itself; said attachment clip 84 however permits any subsequent manual adjustment by the user.

As mentioned above, the lever device 16 comprises a clamp 40 and an actuation lever 44. The lever device 16 and the clamp 40 may be in one piece, thereby constituting a monolith lever device, or the lever device 16 and the clamp 40 may be hinged to each other at the rotation pin 20 defining the actuation axis R-R of the device 4.

For example, solutions in which the clamp 40 and the actuation lever 44 are in one piece are shown in figures 3b-3d.

Preferably, the clamp 40 comprises a second regulator 92 joined to the clamp 40 to adjust the distance at rest between the clamp 40 and the actuation lever 44, said second regulator 92 being attached to the clamp 40, on the opposite side to the adjustment device 32. The adjustment of the distance at rest between the clamp 40 and the actuation lever 44 in fact adjusts the distance at rest between the actuation lever 44 and the handlebar to which the device 4 is associated.

According to one embodiment, the second regulator 92 comprises a tip 96 positioned between the clamp 40 and an attachment end 98 of the actuation lever 44, wherein the tip 96 is fitted with screwing means to adjust the orientation at rest of the actuation lever 44 in relation to the actuation axis R-R.

The functioning of the actuation device 4 according to the invention will now be described.

The first regulator 48 may be rotated in its threaded seat 52 so as to translate in relation thereto by a maximum stroke δ, parallel to the adjustment axis X-x. The rotation of the first regulator 48 may be conveniently performed by inserting a tool, such as for example an "Allen" type wrench through the window 64 so as to engage with the cavity 60 and rotate said first regulator. The end stops of the maximum and minimum adjustment are thus defined.

As seen , the rotation of the first regulator 48 entails its translation parallel to the adjustment axis X-X: such translation drags the adjustment device with it which in turn is operatively connected to the command rod 28 and thus to the piston 14.

The first end stop is given by the abutment between the actuation ring-nut 80 and the bracket 40: such position (figure 7-9) corresponds to the maximum empty stroke possible which can be imposed on the actuation lever 44, such stroke will be equal to the sum of the distances Cv + δ, wherein Cv is the stroke obtained by the adjustment of the first regulator, while δ is the stroke substantially equal to the axial width of the opening of the supply duct of the hydraulic circuit.

Cv is the stroke which the piston 14 must necessarily cover to occlude the opening of the supply duct: in fact only when the opening is completely occluded is the fluid of the system pressurised thereby permitting the actuation of the devices connected thereto, such as for example a brake or a clutch.

The distance δ is instead the stroke given by the first regulator 48: this stroke is obviously limited by the fact that the supply hole or opening of the supply duct must always be unobstructed, so as to permit the fluid of the hydraulic circuit coming from the tank, to compensate the wear of the parts of the system connected to the device, whether of the brakes or of the clutches.

Consequently the minimum stroke of the first regulator 48 is given by the position in which the piston 14 finds itself at the beginning of the supply opening, as for example illustrated in figures 10-12.

The user may, independently of the adjustment of the first regulator 48, rotate the adjustment device 32 as desired, so as to modify the lever ratio, and thus the sensitivity of the actuation lever 44 for the same force applied to the lever by the user.

The adjustment of the adjustment device 32 is entirely independent of that of the first regulator 48 given that the adjustment device 32 may rotate relative to the first regulator 48 with the same stroke or axial position thereof.

Thanks to the eccentricity "E" identified between an axis of symmetry Y-Y of the first end 36 and the adjustment axis X-X, by rotating the adjustment device 32 , the orientation of the command rod 28 is changed and thus the lever arm L of the actuation lever 44 in relation to the actuation axis R-R. Figures 4-6 show three configurations with increasing lever arms;

Lastly, the user may modify the position/orientation of the actuation lever 44 in relation to the actuation axis R-R and thus the distance of the actuation lever in relation to the associable handlebar (not shown).

As may be appreciated from the description, the actuation device according to the invention makes it possible to overcome the drawbacks of the prior art.

In particular the device has all the functions of adjustment of the distance of the actuation lever from the handlebar, of the empty stroke of the actuation lever and of the actuation sensitivity of the lever, that is to say the adjustment of the transmission ratio between the stroke of the actuation lever and the stroke of the actuation device piston.

It is to be noted that all these adjustments may be performed by means of a single device, practical and economical to produce and assemble.

In addition, the adjustments spoken of may be conveniently made while the vehicle is moving.

It is thus possible to provide the vehicle with a plurality of adjustments which permit the user to customise the ergonomics and sensitivity of the hydraulic actuators of the brakes and of the clutches of motorcycles, as much as possible.

A person skilled in the art may make numerous modifications and variations to the devices described above so as to satisfy contingent and specific requirements while remaining within the sphere of protection of the invention as defined by the following claims.

## Claims

1. Actuation device (4) for actuating a hydraulic actuator (12) such as a brake and/or clutch, in particular for motorcycles, the device (4) comprising:
- a support (8) suitable for being connected to a weight-bearing structure,
- a hydraulic actuator (12) connected to the support (8),
- at least one lever device (16) connected to the support (8) so as to rotate around an actuation axis (R-R) so as to permit its movement towards and/or away from the hydraulic actuator (12) to influence said hydraulic actuator (12) in movement,
a command rod (28) and an adjustment device (32) positioned between the at least one lever device (16) and a piston (14) of said hydraulic actuator (12) so as to transmit the movement from the at least one lever device (16) to said piston (14),
wherein the adjustment device (32) is supported so as to rotate around an adjustment axis (X-X) and comprises a first end (36) which interfaces, at least partially by means of a shaped coupling, with an end (38) of the command rod (28),
- wherein said first end (36) of the adjustment device (32) is eccentric to the adjustment axis (X-X) so that a rotation of the adjustment device (32) is adapted to produce a variation/adjustment of the orientation of the command rod (28) in relation to the actuation axis (R-R) of the at least one lever device (16) and thereby the adjustment of the lever ratio,
- wherein the at least one lever device (16) comprises a clamp (40) connected to the support (8) so as to rotate around said actuation axis (R-R) and an actuation lever (44), suitable for being gripped by the user,
wherein
a first regulator (48) is inserted between the at least one lever device (16) and the adjustment device (32) which is adapted to regulate the axial position of the adjustment device (32) in relation to the at least one lever device (16), said position being measured parallel to the adjustment axis (X-X), the first regulator (48) being axially constrained to the adjustment device (32) so as to translate with it parallel to the adjustment axis (X-X) along an adjustment stroke (δ),
**characterised in that**
the first regulator (48) is a bush screwed into a threaded seat (52) made on said clamp (40), said bush being hollow so as to house the adjustment device (32) at least partially , the adjustment device (32) being joined to the first regulator (48) by means of a coupling which axially joins the adjustment device (32) and the first regulator (48) to each other parallel to the adjustment axis (X-X) and which permits the relative rotation between them in relation to said adjustment axis (X-X).

2. Device (4) according to claim 1, wherein the first regulator (48) is rotatable in relation to the adjustment device (32) around said adjustment axis (X-X), so as to modify the adjustment stroke (δ).

3. Device (4) according to any of the previous claims, wherein the piston (14) of the hydraulic actuator (12) is suitable for pressurising an actuation fluid of an associable hydraulic circuit, the piston (14) being housed in a cylinder (21) which is adapted to receive the actuation fluid through a supply duct (18) coming out in said cylinder (21) through an opening (19), wherein the first regulator (48) translating in relation to the adjustment axis (X-X) is adapted to translate the adjustment device (32), the command rod (28) and said piston (14) so as to bring the piston (14) next to said opening (19) without ever obstructing it.

4. Device (4) according to any of the previous claims, wherein the first regulator (48) is positioned coaxially to the adjustment axis (X-X) of the adjustment device (32) .

5. Device (4) according to any of the previous claims, wherein the first regulator (48) comprises an adjustment head provided with a cavity (60) to permit its rotation from the outside, and wherein the actuation lever (44) comprises a window (64) facing the first regulator (48) and passing through said actuation lever (44) so as to permit the passage of a tool from outside the actuation lever (44) and its engagement with the cavity (60) of the first regulator (48), for the rotation of said first regulator (48).

6. Device (4) according to any of the previous claims, wherein the clamp (40) comprises a bracket (68) which is adapted to receive the adjustment device (32) and the first regulator (48), said bracket (68) defining the threaded seat (52) inside which the first regulator (48) is screwed.

7. Device (4) according to claim 6, wherein the bracket (68) has at least one lateral hole (72) in which a blocking means (74) of the position of the first regulator (48) is screwed.

8. Device (4) according to any of the previous claims, wherein the adjustment device (32) comprises an actuation ring-nut (80) positioned between the actuation lever (44) and the command rod (28), so as to permit the manual rotation of such adjustment device (32).

9. Device (4) according to claim 8, wherein the actuation ring-nut (80) has a greater diameter than the threaded seat (52) which the first regulator (48) is housed in, made on said clamp (40), so that the actuation ring-nut (80) forms an end stop in the adjustment of the axial position of the first regulator (48) and therefore of the adjustment device (32), the abutment between the actuation ring-nut (80) and the clamp (40) corresponding to the maximum empty stroke (Cv) of the piston (14) of the hydraulic actuator (12) which can be obtained from the adjustment.

10. Device (4) according to any of the previous claims, wherein the clamp (40) comprises a second regulator (92) joined to the clamp (40) to adjust the distance at rest between the clamp (40) and the actuation lever (44), said second regulator (92) being attached to the clamp (40), on the opposite side to the adjustment device (32).

11. Device (4) according to claim 10, wherein said second regulator (92) comprises a tip (96) positioned between the clamp (40) and an attachment end (98) of the actuation lever (44), wherein the tip (96) is fitted with screwing means to adjust the orientation at rest of the actuation lever (44) in relation to the actuation axis (R-R).

12. Device (4) according to any of the previous claims, wherein the first end (36) of the adjustment device (32) is shaped so as to define a seat which at least partially houses the end (38) of the command rod (28), said end (38) of the command rod (28) being shaped so as to define a protuberance at least partially housed in said seat.

13. Device (4) according to any of the claims from 1 to 11, wherein the first end (36) of the adjustment device (32) is shaped so as to define a protuberance at least partially housed in the end (38) of the command rod (28), said end (38) of the command rod (28) being shaped so as to define a seat.

14. Device (4) according to claim 12 or 13, wherein the seat is a paraboloid shape and the protuberance has a spherical cap shape.

## Patentansprüche

1. Betätigungsvorrichtung (4) zur Betätigung eines hydraulischen Aktuators (12), wie beispielsweise einer Bremse und/oder Kupplung, insbesondere für Motorräder, wobei die Vorrichtung (4) umfasst:
eine Halterung (8), die geeignet ist, mit einer gewichttragenden Struktur verbunden zu sein,
einen hydraulischen Aktuator (12), der mit der Halterung (8) verbunden ist,
mindestens eine Hebelvorrichtung (16), die mit der Halterung (8) verbunden ist, um sich um eine Betätigungsachse (R-R) zu drehen, um deren Bewegung zu dem hydraulischen Aktuator (12) hin und/oder von diesem weg zu erlauben, um den hydraulischen Aktuator (12) in Bewegung zu beeinflussen,
eine Steuerstange (28) und eine Einstellvorrichtung (32), die zwischen der mindestens einen Hebelvorrichtung (16) und einem Kolben (14) des hydraulischen Aktuators (12) positioniert sind, um die Bewegung von der mindestens einen Hebelvorrichtung (16) auf den Kolben (14) zu übertragen,
wobei die Einstellvorrichtung (32) so gelagert ist, dass sie sich um eine Einstellachse (X-X) dreht und ein erstes Ende (36) umfasst, das mindestens teilweise mittels einer geformten Kupplung mit einem Ende (38) der Steuerstange (28) verbunden ist,
wobei das erste Ende (36) der Einstelleinheit (32) exzentrisch zur Einstellachse (X-X) ist, sodass eine Drehung der Einstellvorrichtung (32) angepasst ist, eine Veränderung/Einstellung der Ausrichtung der Steuerstange (28) in Bezug auf die Betätigungsachse (R-R) der mindestens einen Hebelvorrichtung (16) und dadurch die Einstellung des Hebelverhältnisses zu bewirken,
wobei die mindestens eine Hebelvorrichtung (16) ein Klemmstück (40), das mit der Halterung (8) verbunden ist, um sich um die Betätigungsachse (R-R) zu drehen, und einen Betätigungshebel (44) umfasst, der angepasst ist, von dem Benutzer ergriffen zu werden,
wobei ein erster Regler (48) zwischen der mindestens einen Hebelvorrichtung (16) und der Einstellvorrichtung (32) eingesetzt ist, der geeignet ist, die axiale Position der Einstellvorrichtung (32) in Bezug auf die mindestens eine Hebelvorrichtung (16) zu regulieren, wobei die Position parallel zur Einstellachse (X-X) gemessen wird, wobei der erste Regler (48) axial auf die Einstellvorrichtung (32) beschränkt ist, um sich mit ihr parallel zur Einstellachse (X-X) entlang eines Einstellhubs (δ) zu verschieben,
**dadurch gekennzeichnet, dass**
der erste Regler (48) eine Buchse ist, die in einen Gewindesitz (52) eingeschraubt ist, der am Klemmstück (40) ausgeführt ist, wobei die Buchse hohl ist, um die Einstellvorrichtung (32) mindestens teilweise unterzubringen, wobei die Einstellvorrichtung (32) mit dem ersten Regler (48) mittels einer Kupplung verbunden ist, die die Einstellvorrichtung (32) und den ersten Regler (48) axial parallel zur Einstellachse (X-X) miteinander verbindet und die relative Drehung zwischen ihnen in Bezug auf die Einstellachse (X-X) erlaubt.

2. Vorrichtung (4) nach Anspruch 1, wobei der erste Regler (48) in Bezug auf die Einstellvorrichtung (32) um die Einstellachse (X-X) drehbar ist, um den Einstellhub (δ) zu verändern.

3. Vorrichtung (4) nach einem der vorhergehenden Ansprüche, wobei der Kolben (14) des hydraulischen Aktuators (12) geeignet ist, ein Betätigungsfluid eines zugehörigen Hydraulikkreises unter Druck zu setzen, wobei der Kolben (14) in einem Zylinder (21) untergebracht ist, der angepasst ist, das Betätigungsfluid durch einen Zuführungskanal (18) aufzunehmen, der durch eine Öffnung (19) in den Zylinder (21) hervortritt, wobei der erste Regler (48), der sich in Bezug auf die Einstellachse (X-X) verschiebt, angepasst ist, die Einstellvorrichtung (32), die Steuerstange (28) und den Kolben (14) zu verschieben, um den Kolben (14) neben die Öffnung (19) zu bringen, ohne ihn je zu behindern.

4. Vorrichtung (4) nach einem der vorhergehenden Ansprüche, wobei der erste Regler (48) koaxial zur Einstellachse (X-X) der Einstellvorrichtung (32) positioniert ist.

5. Vorrichtung (4) nach einem der vorhergehenden Ansprüche, wobei der erste Regler (48) einen Einstellkopf umfasst, der mit einem Hohlraum (60) versehen ist, um seine Drehung von außen zu erlauben, und wobei der Betätigungshebel (44) ein Fenster (64) umfasst, das dem ersten Regler (48) zugewandt ist und durch den Betätigungshebel (44) verläuft, um den Durchtritt eines Werkzeugs von außerhalb des Betätigungshebels (44) und dessen Eingriff mit dem Hohlraum (60) des ersten Reglers (48) für die Drehung des ersten Reglers (48) zu erlauben.

6. Vorrichtung (4) nach einem der vorhergehenden Ansprüche, wobei das Klemmstück (40) einen Halter (68) umfasst, der geeignet ist, die Einstellvorrichtung (32) und den ersten Regler (48) aufzunehmen,
wobei der Halter (68) den Gewindesitz (52), in den der erste Regler (48) eingeschraubt ist, definiert.

7. Vorrichtung (4) nach Anspruch 6, wobei der Halter (68) mindestens ein seitliches Loch (72) aufweist, in das ein Sperrmittel (74) der Position des ersten Reglers (48) eingeschraubt ist.

8. Vorrichtung (4) nach einem der vorhergehenden Ansprüche, wobei die Einstellvorrichtung (32) eine Betätigungsringmutter (80) umfasst, die zwischen dem Betätigungshebel (44) und der Steuerstange (28) positioniert ist, um die manuelle Drehung einer solchen Einstellvorrichtung (32) zu erlauben.

9. Vorrichtung (4) nach Anspruch 8, wobei die Betätigungsringmutter (80) einen größeren Durchmesser als der Gewindesitz (52) aufweist, in dem der erste Regler (48) untergebracht ist, der auf dem Klemmstück (40) ausgeführt ist, sodass die Betätigungsringmutter (80) bei der Einstellung der axialen Position des ersten Reglers (48) und somit der Einstellvorrichtung (32) einen Endanschlag bildet, wobei der Anschlag zwischen der Betätigungsringmutter (80) und dem Klemmstück (40) dem maximalen Leerhub (Cv) des Kolbens (14) des hydraulischen Aktuators (12) entspricht, der von der Einstellung erhalten werden kann.

10. Vorrichtung (4) nach einem der vorhergehenden Ansprüche, wobei das Klemmstück (40) einen zweiten Regler (92) umfasst, der mit dem Klemmstück (40) verbunden ist, um den Abstand im Ruhezustand zwischen dem Klemmstück (40) und dem Betätigungshebel (44) einzustellen, wobei der zweite Regler (92) an dem Klemmstück (40) auf der gegenüberliegenden Seite der Einstellvorrichtung (32) befestigt ist.

11. Vorrichtung (4) nach Anspruch 10, wobei der zweite Regler (92) eine Spitze (96) umfasst, die zwischen dem Klemmstück (40) und einem Befestigungsende (98) des Betätigungshebels (44) positioniert ist, wobei die Spitze (96) mit Schraubmitteln versehen ist, um die Ausrichtung im Ruhezustand des Betätigungshebels (44) in Bezug auf die Betätigungsachse (R-R) einzustellen.

12. Vorrichtung (4) nach einem der vorhergehenden Ansprüche, wobei das erste Ende (36) der Einstellvorrichtung (32) so geformt ist, dass es einen Sitz definiert, in dem mindestens teilweise das Ende (38) der Steuerstange (28) untergebracht ist, wobei das Ende (38) der Steuerstange (28) so geformt ist, dass es einen Vorsprung definiert, der mindestens teilweise in dem Sitz untergebracht ist.

13. Vorrichtung (4) nach einem der Ansprüche 1 bis 11,
wobei das erste Ende (36) der Einstellvorrichtung (32) so geformt ist, dass es einen Vorsprung definiert, der mindestens teilweise in dem Ende (38) der Steuerstange (28) untergebracht ist, wobei das Ende (38) der Steuerstange (28) so geformt ist, dass es einen Sitz definiert.

14. Vorrichtung (4) nach Anspruch 12 oder 13, wobei der Sitz eine Paraboloidform aufweist und der Vorsprung eine Kugelkalottenform aufweist.

## Revendications

1. Dispositif (4) d'actionnement pour actionner un actionneur hydraulique (12) tel qu'un frein et/ou un embrayage, en particulier pour motocycles, le dispositif (4) comprenant :
- un support (8) apte à être relié à une structure porteuse de poids,
- un actionneur hydraulique (12) relié au support (8),
- au moins un dispositif de levier (16) relié au support (8) de manière à tourner autour d'un axe d'actionnement (R-R) de manière à permettre son mouvement vers et/ou en s'éloignant de l'actionneur hydraulique (12) pour influencer ledit actionneur hydraulique (12) en mouvement,
- une tige de commande (28) et un dispositif de réglage (32) positionnés entre l'au moins un dispositif de levier (16) et un piston (14) dudit actionneur hydraulique (12) de manière à transmettre le mouvement de l'au moins un dispositif de levier (16) audit piston (14),
dans lequel le dispositif de réglage (32) est porté de manière à tourner autour d'un axe de réglage (X-X) et comprend une première extrémité (36) qui s'interface, au moins partiellement au moyen d'un accouplement conformé, avec une extrémité (38) de la tige de commande (28),
- dans lequel ladite première extrémité (36) du dispositif de réglage (32) est excentrique par rapport à l'axe de réglage (X-X) de telle sorte qu'une rotation du dispositif de réglage (32) est apte à produire une variation/un réglage de l'orientation de la tige de commande (28) par rapport à l'axe d'actionnement (R-R) de l'au moins un dispositif de levier (16) et ainsi le réglage du rapport de levier,
- dans lequel l'au moins un dispositif de levier (16) comprend une pince (40) reliée au support (8) de manière à tourner autour dudit axe d'actionnement (R-R) et un levier d'actionnement (44) apte à être saisi par l'utilisateur,
dans lequel
un premier régulateur (48) est inséré entre l'au moins un dispositif de levier (16) et le dispositif de réglage (32), qui est apte à réguler la position axiale du dispositif de réglage (32) par rapport à l'au moins un dispositif de levier (16), ladite position étant mesurée parallèlement à l'axe de réglage (X-X), le premier régulateur (48) étant axialement contraint avec le dispositif de réglage (32) de manière à se déplacer en translation avec celui-ci parallèlement à l'axe de réglage (X-X) le long d'une course de réglage (δ),
**caractérisé en ce que**
le premier régulateur (48) est une douille vissée dans un siège fileté (52) formé sur ladite pince (40), ladite douille étant creuse de manière à loger le dispositif de réglage (32) au moins partiellement, le dispositif de réglage (32) étant raccordé au premier régulateur (48) au moyen d'un accouplement qui raccorde axialement le dispositif de réglage (32) et le premier régulateur (48) l'un avec l'autre parallèlement à l'axe de réglage (X-X) et qui permet la rotation relative entre eux par rapport audit axe de réglage (X-X).

2. Dispositif (4) selon la revendication 1, dans lequel le premier régulateur (48) peut tourner par rapport au dispositif de réglage (32) autour dudit axe de réglage (X-X), de manière à modifier la course de réglage (δ).

3. Dispositif (4) selon l'une quelconque des revendications précédentes, dans lequel le piston (14) de l'actionneur hydraulique (12) est apte à mettre sous pression un fluide d'actionnement d'un circuit hydraulique pouvant être associé, le piston (14) étant logé dans un cylindre (21) qui est apte à recevoir le fluide d'actionnement par l'intermédiaire d'un conduit d'alimentation (18) débouchant dans ledit cylindre (21) à travers une ouverture (19), dans lequel le premier régulateur (48) se déplaçant en translation par rapport à l'axe de réglage (X-X) est apte à déplacer en translation le dispositif de réglage (32), la tige de commande (28) et ledit piston (14) de manière à amener le piston (14) à proximité de ladite ouverture (19) sans jamais l'obstruer.

4. Dispositif (4) selon l'une quelconque des revendications précédentes, dans lequel le premier régulateur (48) est positionné de manière coaxiale à l'axe de réglage (X-X) du dispositif de réglage (32).

5. Dispositif (4) selon l'une quelconque des revendications précédentes, dans lequel le premier régulateur (48) comprend une tête de réglage équipée d'une cavité (60) pour permettre sa rotation depuis l'extérieur, et dans lequel le levier d'actionnement (44) comprend une fenêtre (64) orientée vers le premier régulateur (48) et traversant ledit levier d'actionnement (44) de manière à permettre le passage d'un outil depuis l'extérieur du levier d'actionnement (44) et sa mise en prise avec la cavité (60) du premier régulateur (48), pour la rotation dudit premier régulateur (48).

6. Dispositif (4) selon l'une quelconque des revendications précédentes, dans lequel la pince (40) comprend un support (68) qui est apte à recevoir le dispositif de réglage (32) et le premier régulateur (48), ledit support (68) définissant le siège fileté (52) à l'intérieur duquel le premier régulateur (48) est vissé.

7. Dispositif (4) selon la revendication 6, dans lequel le support (68) possède au moins un trou latéral (72) dans lequel un moyen de blocage (74) de la position du premier régulateur (48) est vissé.

8. Dispositif (4) selon l'une quelconque des revendications précédentes, dans lequel le dispositif de réglage (32) comprend un écrou à oeillet d'actionnement (80) positionné entre le levier d'actionnement (44) et la tige de commande (28), de manière à permettre la rotation manuelle de ce dispositif de réglage (32).

9. Dispositif (4) selon la revendication 8, dans lequel l'écrou à oeillet d'actionnement (80) a un diamètre supérieur à celui du siège fileté (52) dans lequel le premier régulateur (48) est logé, formé sur ladite pince (40), de telle sorte que l'écrou à oeillet d'actionnement (80) forme une butée d'arrêt lors du réglage de la position axiale du premier régulateur (48) et par conséquent du dispositif de réglage (32), la butée entre l'écrou à oeillet d'actionnement (80) et la pince (40) correspondant à la course à vide maximale (Cv) du piston (14) de l'actionneur hydraulique (12) qui peut être obtenue par le réglage.

10. Dispositif (4) selon l'une quelconque des revendications précédentes, dans lequel la pince (40) comprend un second régulateur (92) raccordé à la pince (40) pour régler la distance au repos entre la pince (40) et le levier d'actionnement (44), ledit second régulateur (92) étant fixé à la pince (40) sur le côté opposé au dispositif de réglage (32).

11. Dispositif (4) selon la revendication 10, dans lequel ledit second régulateur (92) comprend une pointe (96) positionnée entre la pince (40) et une extrémité de fixation (98) du levier d'actionnement (44), dans lequel la pointe (96) est munie de moyens de vissage pour régler l'orientation au repos du levier d'actionnement (44) par rapport à l'axe d'actionnement (R-R).

12. Dispositif (4) selon l'une quelconque des revendications précédentes, dans lequel la première extrémité (36) du dispositif de réglage (32) est mise en forme de manière à définir un siège qui loge au moins partiellement l'extrémité (38) de la tige de commande (28), ladite extrémité (38) de la tige de commande (28) étant mise en forme de manière à définir une protubérance au moins partiellement logée dans ledit siège.

13. Dispositif (4) selon l'une quelconque des revendications 1 à 11, dans lequel la première extrémité (36) du dispositif de réglage (32) est mise en forme de manière à définir une protubérance au moins partiellement logée dans l'extrémité (38) de la tige de commande (28), ladite extrémité (38) de la tige de commande (28) étant mise en forme de manière à définir un siège.

14. Dispositif (4) selon la revendication 12 ou 13, dans lequel le siège est de forme paraboloïde et la protubérance a une forme de calotte sphérique.
